# DEMANDE DE BREVET EUROPEEN

(11) **EP 2 401 949 A1**
(43) Date de publication de la demande: **04.01.2012**
(21) Numéro de dépôt: 11290274.7
(22) Date de dépôt: 17.06.2011
(51) Int. Cl.: A47J 37/07

(54) **Barbecue**

(30) Priorité: 29.06.2010 FR 1002697
(71) Demandeur: Pereira, Henrique, 91520 Egly (FR)
(72) Inventeur: Pereira, Henrique, 91520 Egly (FR)
(74) Mandataire: Flavenot, Bernard

(57) **Abrégé**

La présente invention concerne les barbecues pour griller des aliments et aptes à fonctionner dans un milieu où règne une force de gravitation définissant une verticale V.

Le barbecue selon l'invention est essentiellement caractérisé par le fait qu'il comporte un réceptacle de source de chaleur 10 avec une ouverture 12, un cadre de grille 14 et des moyens pour retourner ce cadre sur un demi-tour autour d'un axe transversal 16 lié au cadre, ces derniers moyens étant constitués de deux systèmes mécaniques 31, 32 identiques montés en coopération respectivement avec deux bords opposés 41, 42 du cadre 14 et avec les deux bords opposés correspondants 44, 45 de l'ouverture 12, ces deux systèmes mécaniques transformant un mouvement de translation du cadre 14 selon la verticale V en un mouvement de rotation du cadre autour de l'axe 16, sur un demi-tour.

## Description

La présente invention concerne les barbecues, c'est-à-dire les dispositifs qui permettent de cuire des aliments en les grillant au moyen d'une source de chaleur donnée, par exemple, par un carburant comme du charbon de bois ou du gaz, ou par une énergie électrique.

De tels barbecues sont bien connus et couramment utilisés de nos jours. L'un des problèmes qui se posent à leurs utilisateurs est celui du retournement des aliments quand ils sont cuits d'un côté, pour les faire griller de l'autre côté.

La méthode la plus simple est de retourner manuellement, au moyen par exemple d'un ustensile comme une longue fourchette ou analogue, les aliments à griller qui sont disposés sur une grille au-dessus du foyer.

Une autre méthode consiste à enserrer les aliments entre deux grilles, et à retourner les deux grilles enserrant les aliments, soit manuellement, soit au moyen d'un moteur ou analogue.

En fait, l'une ou l'autre de ces deux méthodes présente des inconvénients, notamment le fait qu'elles obligent les utilisateurs des barbecues à des manipulations peu aisées, et même parfois dangereuses. Certes, à ces barbecues, peuvent être adjoints des moteurs qui permettent, dans le cas de la seconde méthode, de retourner les aliments de façon automatisée, sans l'intervention manuelle des utilisateurs. Mais, de tels barbecues ont un prix relativement élevé, ce qui ne leur permet pas d'être à la portée d'un grand nombre de personnes. Sans compter en outre que cette automatisation fait perdre aux barbecues ainsi équipés, le charme d'une manipulation manuelle des aliments dans une chaude ambiance conviviale.

Un tel barbecue est par exemple décrit dans le US-A-5 884 554 et éventuellement dans le EP-A-0 353 642.

Dans le document US, les moyens pour retourner les aliments sur la grille sont essentiellement constitués de deux sortes de moyens séparés, une première sorte de moyens qui engendre la translation de la grille et la seconde sorte qui engendre le mouvement de rotation de cette même grille. La juxtaposition de ces deux sortes de moyens fait que la réalisation du barbecue est relativement complexe et le barbecue lui-même relativement onéreux.

Aussi, la présente invention a-t-elle pour but de réaliser un barbecue qui pallie les inconvénients, mentionnés ci-dessus, des barbecues existant actuellement sur le marché et qui soit, tout permettant d'obtenir le même résultat, plus simple et donc moins onéreux, et aussi plus attractif.

Plus précisément, la présente invention a pour objet un barbecue pour griller des aliments selon la revendication 1 annexée.

D'autres caractéristiques et avantages de la présente invention apparaîtront au cours de la description suivante donnée en regard des dessins annexés à titre illustratif mais nullement limitatif, dans lesquels :
La figure 1 représente, dans une vue de dessus, un mode de réalisation du barbecue selon l'invention, le barbecue étant dans une première configuration d'utilisation possible, et
La figure 2 représente une vue de côté du barbecue selon l'invention, dans le même mode de réalisation que celui représenté sur la figure 1, mais dans une autre configuration qui est celle prise par le barbecue lors du retournement de la grille de support des aliments.

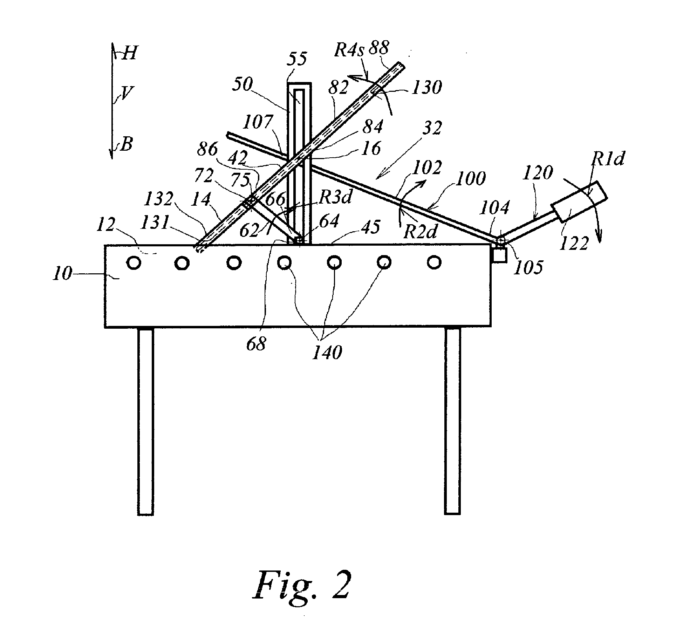

En référence aux deux figures annexées, la présente invention est relative à un barbecue pour griller des aliments essentiellement lorsqu'il est apte à fonctionner dans un milieu où règne une force de gravitation dirigée suivant une verticale V définissant ainsi des positions relatives hautes H et basses B, figure 2.

Le barbecue comporte un réceptacle 10 ayant généralement la forme d'un parallélépipède rectangle ou analogue, apte à recevoir une source de chaleur et comprenant au moins une ouverture 12 située en sa partie haute. Cette source de chaleur est généralement du charbon de bois incandescent, mais peut être de tout autre type, par exemple un brûleur à gaz, des résistances électriques, etc.

Il comporte en outre un cadre de grille 14 apte à supporter fixement une grille 130 pour recevoir les aliments à griller, et des moyens pour retourner ce cadre de grille sur environ un demi-tour autour d'un axe transversal 16 lié au cadre de grille 14 et situé sensiblement dans son plan.

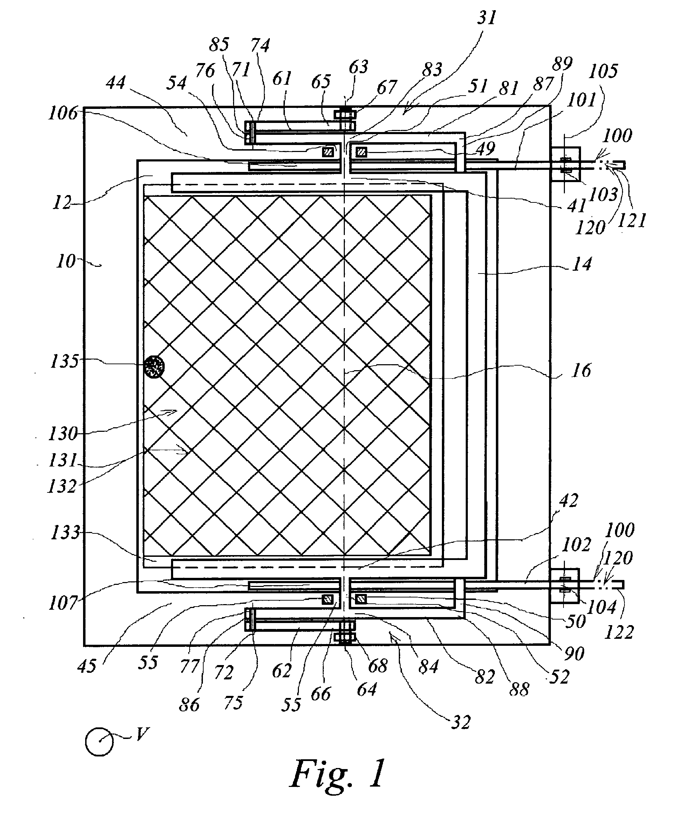

Selon une caractéristique principale de l'invention, ces moyens pour retourner le cadre de grille sont constitués par deux systèmes mécaniques 31, 32, figure 1, sensiblement identiques. Ces deux systèmes mécaniques sont montés en coopération respectivement avec les deux bords opposés 41, 42 du cadre de grille 14 sensiblement perpendiculaires à l'axe transversal 16 et avec les deux bords opposés 44, 45 de l'ouverture 12 correspondant aux deux bords opposés 41, 42 du cadre de grille, de façon que le cadre de grille 14 soit constamment situé dans l'espace situé au-dessus de l'ouverture 12.

Les deux systèmes mécaniques sont positionnés par rapport à l'axe transversal 16 comme visible sur la figure 1.

Les deux systèmes mécaniques 31, 32 selon l'invention ont pour fonction principale de transformer, tous les deux en même temps, c'est-à-dire simultanément, un mouvement de translation du cadre de grille 14 selon sensiblement la verticale V en montée et en descente, en un mouvement de rotation du cadre de grille autour de son axe transversal 16 sur environ un demi-tour.

Selon une réalisation particulièrement préférentielle, chaque système mécanique 31, 32, dont la fonction principale a été définie ci-dessus, comporte une portion d'arbre 51, 52 solidaire du cadre de grille 14 en saillie sur celui-ci et centrée sur l'axe transversal 16, figure 1, un guide 49, 50, figures 1 et 2, solidaire du bord 44, 45 de l'ouverture 12, ce guide comportant une rainure 54, 55 définie selon une direction sensiblement parallèle à la verticale V, la rainure 54, 55 et la portion d'arbre 51, 52 étant en outre agencées de façon que la portion d'arbre soit apte à coulisser dans la rainure 54, 55, et de façon que le cadre de grille 14 soit apte à se déplacer entre deux positions limites, l'axe transversal 16 restant toujours parallèle à lui-même et sensiblement perpendiculaire à la verticale V.

Chaque système mécanique comporte en outre une biellette 61, 62, des premiers moyens pour monter en rotation, autour d'un premier axe de rotation 63, 64 passant par un point fixe 67, 68 du bord 44, 45 de l'ouverture 12, une première extrémité 65, 66 de cette biellette 61, 62, ce point fixe du bord de l'ouverture (appartenant directement au réceptacle ou indirectement par exemple au moyen d'une platine rapportée sur le réceptacle) étant situé sensiblement dans le plan vertical contenant l'axe transversal 16.

Il comporte en outre des seconds moyens pour monter en rotation, autour d'un deuxième axe de rotation 71, 72 passant par un point 76, 77 du cadre de grille 14, la seconde extrémité 74, 75 de la biellette 61, 62 opposée à la première extrémité 65, 66, ce point 76, 77 du cadre de grille étant situé à une distance de la portion d'arbre égale à la distance inter-axe séparant les premier et deuxième axes de rotation 63, 64 - 71, 72, la longueur de la rainure 54, 55 étant au moins égale au double de la distance inter-axe, les premier et deuxième axes de rotation 63, 64 - 71, 72 étant en outre parallèles entre eux et à l'axe transversal 16 de façon que le cadre de grille puisse être parallèle au plan de l'ouverture 12, comme il sera explicité ci-après.

De façon avantageuse, dans un but explicité ci-après, il est préférable que les premier et deuxième axes de rotation 63, 64 - 71, 72 soient montés sciemment avec un léger jeu mécanique non négligeable, de quelques degrés.

Chaque système mécanique 31, 32 comporte en plus des moyens 100 pour appliquer une force sur la portion d'arbre 51, 52 de façon à la déplacer le long de la rainure 54, 55, au moins de bas B en haut H sur la verticale V. Un exemple préférentiel de réalisation de ces derniers moyens est donné ci-après.

Selon une réalisation avantageuse, les seconds moyens pour monter en rotation la seconde extrémité 74, 75 de la biellette sont constitués par une patte 81, 82, des moyens pour solidariser cette patte 81, 82, sensiblement en sa partie médiane 83, 84, avec l'extrémité libre de la portion d'arbre 51, 52, de façon que cette patte soit sensiblement parallèle au bord 41, 42 du cadre de grille 14 et de façon que le guide 49, 50 soit avantageusement situé entre la patte 81, 82 et le bord 41, 42 du cadre de grille, figure 1.

Comme illustré sur les figures, le point 76, 77 du cadre de grille 14 en lequel la seconde extrémité 74, 75 de la biellette 61, 62 est montée en rotation autour du second axe de rotation 71, 72, est situé sur une première extrémité libre 85, 86 de la patte 81, 82. Dans ce cas, la seconde extrémité 87, 88 de la patte 81, 82 opposée à cette première extrémité libre 85, 86 est solidarisée avec le bord 41, 42 du cadre de grille 14 par une barrette 89, 90 de façon que la patte, la barrette et le bord du cadre de grille forment sensiblement un U rigide non-déformable, la barrette 89, 90 formant la base du U.

Comme mentionné ci-avant, chaque système mécanique 31, 32 comporte des moyens 100 pour appliquer une force sur la portion d'arbre 51, 52. Ces derniers moyens peuvent être constitués de différentes façons. Cependant, de façon très avantageuse d'un point de vue pratique, sécuritaire et attractif, ils sont constitués, comme illustré sur les figures, par au moins un levier 101, 102, une première extrémité 103, 104 de ce levier 101, 102 étant montée en rotation sur le réceptacle 10, par exemple sur un bord perpendiculaire aux bords 44, 45 de l'ouverture 12, autour d'un troisième axe 105 sensiblement parallèle aux premier et deuxième axes de rotation 63, 64 - 71, 72 et à l'axe transversal 16, de façon que, lorsque le levier pivote autour du troisième axe 105 selon la rotation illustrée par la flèche R2d, figure 2, une partie 106, 107 de ce levier, celle qui est à proximité de sa seconde extrémité libre, soit apte à buter et à glisser sous la portion d'arbre 51, 52 de façon à la faire coulisser dans la rainure 54, 55 de bas B en haut H.

Sont aussi prévus des moyens 120 pour commander la rotation du levier 101, 102. De façon avantageuse, ces moyens pour commander la rotation du levier sont constitués d'un manche 121, 122 solidaire de la première extrémité 103, 104 du levier 101, 102 de façon qu'il soit constamment en dehors de l'espace, défini ci-avant, qui est situé au-dessus de l'ouverture 12.

Cependant, comme illustré sur la figure 1, de préférence, les deux systèmes mécaniques 31, 32 comportent chacun un levier 101, 102 et les deux leviers 101, 102 sont aptes, par rotation, à venir buter et glisser respectivement sous les deux portions d'arbre 51, 52 de façon à les faire simultanément coulisser dans les rainures 54, 55, les deux leviers 101, 102 étant montés couplés en parallèle dans une même rotation autour du même troisième axe 105.

De façon préférentielle, le barbecue comporte en outre une grille 130 pour prendre en sandwich les aliments à griller, la grille étant constituée d'au moins deux parties de grille 131, 132 montées en rotation l'une par rapport à l'autre, par un de leurs bords respectifs, de façon qu'elles soient aptes à venir l'une sur l'autre, l'une des deux parties de grille étant en outre montée dans un support 133, ce support étant apte à être monté coulissant dans au moins deux gorges de glissières réalisées en opposition dans le cadre de grille 14. Sur la figure 1, la grille 130 est représentée partiellement glissée dans le cadre de grille 14, pour bien faire ressortir sa structure selon la présente caractéristique par rapport au cadre de grille.

Sont aussi prévus des moyens de blocage réversibles 135 pour lier solidairement les deux parties de grille 131, 132 l'une avec l'autre et maintenir les aliments pincés entre les deux parties de grille, même lors du retournement du cadre et donc de la grille, comme explicité ci-après. Ces moyens peuvent être de tout type connu des hommes du métier, par exemple constitués d'un crochet, d'un ensemble vis-écrou, etc.

En outre, comme visible sur la figure 2, le réceptacle 10 est formé d'un ensemble de parois, parmi lesquelles au moins l'une des parois latérales en position verticale, de préférence toutes ses parois latérales, comporte en partie haute, une pluralité de percées 140, pour alimenter la source de chaleur en comburant (en général l'air).

Le barbecue selon l'invention dont un mode de réalisation est décrit ci-dessus s'utilise de la façon suivante :

Il est tout d'abord supposé que les aliments à griller sont pincés entre les deux parties 131, 132 de la grille 130 et que les moyens de bocage réversibles sont verrouillés. La grille 130 est glissée à fond dans le cadre de grille 14 pour y être bloquée par tout moyen et se trouve initialement en position horizontale, figure 1, juste au-dessus de l'ouverture 12.

Dans cette position, les biellettes 61, 62 et les pattes 81, 82 sont horizontales, dans le même plan que celui de la grille 130.

La source de chaleur fonctionnant, commence à griller les aliments sur une face.

Si l'utilisateur souhaite retourner la grille pour faire griller les aliments sur la face opposée, il agit de la façon suivante décrite en faisant plus particulièrement référence à la figure 2 :

Il saisit les deux manches 121, 122 respectivement avec ses deux mains et leur fait subir une rotation dextrorsum R1d.

Cette rotation R1d des deux manches entraîne une rotation dextrorsum R2d des deux leviers 101, 102 dont les parties 106, 107 viennent buter respectivement sous les deux portions d'arbre 51, 52. Comme ces dernières sont maintenues dans les deux rainures 54, 55 des deux guides 49, 50, le mouvement de rotation des deux leviers entraîne une translation, du bas B vers le haut H, de ces deux portions d'arbre et donc du cadre de grille 14 et par conséquent de la grille 130.

Au cours de cette translation, les deux portions d'arbre s'éloignent respectivement des points fixes du réceptacle 67, 68, ce qui entraîne une rotation dextrorsum R3d des biellettes et une rotation senestrorsum R4s des pattes 81, 82. Comme ces pattes sont solidaires du cadre de grille 14 par les portions d'arbre 51, 52 et les barrettes 89, 90, le cadre de grille subit la même rotation senestrorsum R4s que ces pattes.

Quand les biellettes et les pattes arrivent en position colinéaire verticale, c'est-à-dire quand les deux portions d'arbre sont dans leur position la plus haute dans les rainures, par inertie rotative, lorsqu'il arrive en pivotant dans sa position verticale, le cadre de grille 14 continue légèrement sa rotation senestrorsum R4s pour dépasser cette position verticale. Ce basculement est facilité par l'existence, comme mentionné ci-avant, d'un léger jeu au niveau des premier et second axes de rotation 63, 64 - 71, 72.

L'utilisateur peut relâcher les deux manches et les deux leviers pivotent en sens inverse de la rotation R2d sous le poids du cadre de grille 14. Cependant, de préférence, l'utilisateur peut exercer une force de retenue sur les manches pour que les portions d'arbre redescendent lentement dans les rainures. Quant aux billettes, après le basculement du cadre de grille 14, elles continuent à pivoter dans le sens dextrorsum R3d jusqu'à prendre une position symétrique à leur position initiale.

Quand les portions d'arbre se retrouvent dans leur position la plus basse B, les pattes et les biellettes se retrouvent dans le même plan horizontal qu'à l'origine, mais dans une situation symétrique à celle qui est illustrée sur la figure 1. Le cadre de grille avec la grille est revenu à sa position horizontale initiale, mais en ayant fait un demi-tour. En conséquence, les aliments pincés entre les deux parties de grille ont été retournés sans que l'utilisateur n'ait eu à s'approcher trop près de la source de chaleur, tout en ayant eu le plaisir de contrôler lui-même le retournement des aliments, visuellement et manuellement.

Dans le cas d'un nouveau retournement voulu du cadre de grille 14 d'un demi-tour après celui qui a été décrit ci-dessus, il suffit d'effectuer la même manoeuvre avec les manches, c'est-à-dire leur faire subir une rotation dextrorsum R2d.

Il est alors évident, en se référant à la description faite ci-dessus sans qu'il soit nécessaire d'en faire un plus ample développement, que les pattes et les biellettes subissent alors des rotations inverses aux rotations R4s et R3d décrites ci-dessus, pour revenir à la position illustrée sur la figure 1.

L'utilisateur peut répéter ces opérations autant de fois qu'il le juge nécessaire jusqu'à obtenir la bonne cuisson des aliments.

## Revendications

1. Barbecue pour griller des aliments lorsqu'il est apte à fonctionner dans un milieu où règne une force de gravitation dirigée selon une verticale (V) définissant des positions relatives hautes (H) et basses (B), ledit barbecue comportant :
• un réceptacle (10) apte à recevoir une source de chaleur et comprenant au moins une ouverture (12) située en sa partie haute,
• un cadre de grille (14) apte à supporter une grille (130) pour recevoir les aliments à griller, et
• des moyens pour retourner ledit cadre de grille sur environ un demi-tour autour d'un axe transversal (16) lié au cadre de grille (14) et situé sensiblement dans son plan, constitués par deux systèmes mécaniques (31, 32) sensiblement identiques, ces deux systèmes mécaniques étant montés en coopération respectivement avec les deux bords opposés (41, 42) du cadre de grille (14) sensiblement perpendiculaires à l'axe transversal (16) et avec les deux bords opposés (44, 45) de ladite ouverture (12) correspondant aux deux bords opposés (41, 42) du cadre de grille, de façon que ledit cadre de grille (14) soit constamment situé dans l'espace situé au-dessus de ladite ouverture (12),
**caractérisé par le fait que** les deux systèmes mécaniques (31, 32) transforment un mouvement de translation du cadre de grille (14) selon sensiblement ladite verticale (V) en un mouvement de rotation du dit cadre de grille autour du dit axe transversal (16), sur environ un demi-tour.

2. Barbecue selon la revendication 1, **caractérisé par le fait que** chaque système mécanique (31, 32) comporte :
• une portion d'arbre (51, 52) solidaire du cadre de grille (14) en saillie sur celui-ci et centrée sur ledit axe transversal (16),
• un guide (49, 50) solidaire d'un dit bord (44, 45) de ladite ouverture (12), ledit guide comportant une rainure (54, 55) définie selon une direction sensiblement parallèle à ladite verticale (V), la rainure (54, 55) et la portion d'arbre (51, 52) étant agencées de façon que ladite portion d'arbre soit apte à coulisser dans la rainure (54, 55),
• une biellette (61, 62),
• des premiers moyens pour monter en rotation, autour d'un premier axe de rotation (63, 64) passant par un point fixe (67, 68) du dit bord (44, 45) de ladite ouverture (12), une première extrémité (65, 66) de ladite biellette (61, 62), ce dit point fixe du bord de l'ouverture étant situé sensiblement dans le plan vertical contenant ledit axe transversal (16),
• des seconds moyens pour monter en rotation, autour d'un deuxième axe de rotation (71, 72) passant par un point (76, 77) du cadre de grille (14), la seconde extrémité (74, 75) de ladite biellette (61, 62) opposée à la première extrémité (65, 66), ce dit point (76, 77) du cadre de grille étant situé à une distance de ladite portion d'arbre égale à la distance inter-axe séparant les premier et deuxième axes de rotation (63, 64 - 71, 72), la longueur de ladite rainure (54, 55) étant au moins égale au double de ladite distance inter-axe, les premier et deuxième axes de rotation (63, 64-71, 72) étant en outre parallèles entre eux et au dit axe transversal (16), et
• des moyens (100) pour appliquer une force sur ladite portion d'arbre (51, 52), de façon à la déplacer le long de ladite rainure (54, 55) au moins de bas (B) en haut (H) sur la verticale (V).

3. Barbecue selon la revendication 2, **caractérisé par le fait que** les seconds moyens pour monter en rotation la seconde extrémité (74, 75) de la biellette sont constitués par :
• une patte (81, 82),
• des moyens pour solidariser ladite patte (81, 82), sensiblement en sa partie médiane (83, 84), avec l'extrémité libre de ladite portion d'arbre (51, 52), de façon que cette patte soit sensiblement parallèle au dit bord (41, 42) du cadre de grille (14) et de façon que ledit guide (49, 50) soit situé entre ladite patte (81, 82) et ledit bord (41, 42) du cadre de grille (14).

4. Barbecue selon la revendication 3, **caractérisé par le fait que** ledit point (76, 77) du cadre de grille (14) en lequel la seconde extrémité (74, 75) de ladite biellette (61, 62) est montée en rotation autour du second axe de rotation (71, 72), est situé sur une première extrémité libre (85, 86) de ladite patte (81, 82).

5. Barbecue selon la revendication 4, **caractérisé par le fait que** la seconde extrémité (87, 88) de ladite patte (81, 82) opposée à sa première extrémité libre (85, 86) est solidarisée avec ledit bord (51, 42) du cadre de grille (14) par une barrette (89, 90) de façon que ladite patte, ladite barrette et ledit bord du cadre de grille forment sensiblement un U, ladite barrette (89, 90) formant la base du U.

6. Barbecue selon l'une des revendications précédentes, **caractérisé par le fait que** les moyens (100) pour appliquer une force sur ladite portion d'arbre (51, 52) sont constitués par au moins un levier (101, 102), une première extrémité (103, 104) de ce levier (101, 102) étant montée en rotation sur le réceptacle (10) autour d'un troisième axe (105) sensiblement parallèle aux premier et deuxième axes de rotation (63, 64-71, 72) et à l'axe transversal (16), de façon que, lorsque ledit levier pivote autour du troisième axe (105), une partie (106, 107) de ce levier (101, 102) soit apte à buter et à glisser sous ladite portion d'arbre (51, 52), et des moyens (120) pour commander la rotation du dit levier (101, 102).

7. Barbecue selon la revendication 6, **caractérisé par le fait que** lesdits moyens (120) pour commander la rotation du dit levier sont constitués d'un manche (121, 122) solidaire de la première extrémité (103, 104) du dit levier (101, 102) de façon qu'il soit constamment en dehors du dit espace situé au-dessus de ladite ouverture (12).

8. Barbecue selon l'une des revendications 6 et 7, **caractérisé par le fait que** les deux systèmes mécaniques (31, 32) comportent chacun un levier (101, 102), les deux leviers (101, 102) étant aptes, par rotation, à venir buter et glisser respectivement sous chacune des deux portions d'arbre (51, 52), les deux dits leviers (101, 102) étant montés couplés en parallèle dans une même rotation autour du même troisième axe (105).

9. Barbecue selon l'une des revendications précédentes, **caractérisé par le fait qu'**il comporte en outre une grille (130) pour prendre en sandwich les aliments à griller, ladite grille étant constituée d'au moins deux parties de grille (131, 132) montées en rotation l'une par rapport à l'autre, par un de leurs bords respectifs, de façon qu'elles soient aptes à venir l'une sur l'autre, l'une des deux parties de grille étant en outre montée dans un support (133), ledit support étant apte à être monté coulissant dans au moins deux gorges de glissières réalisées en opposition dans ledit cadre de grille (14), et des moyens de blocage réversibles (135) pour lier solidairement les deux parties de grille (131, 132) l'une avec l'autre.

10. Barbecue selon l'une des revendications précédentes, **caractérisé par le fait que** ledit réceptacle (10) est formé d'un ensemble de parois, parmi lesquelles au moins l'une des parois latérales en position verticale comporte, en partie haute, une pluralité de percées (140).
